Europäisches Patentamt

European Patent Office

Office européen des brevets

(19)

(11) Veröffentlichungsnummer: **0 347 533**
**A2**

## (12) EUROPÄISCHE PATENTANMELDUNG

(21) Anmeldenummer: 89106001.4

(51) Int. Cl.⁴: **F04D 13/06**

(22) Anmeldetag: 06.04.89

(30) Priorität: 22.06.88 DE 3821030

(43) Veröffentlichungstag der Anmeldung:
**27.12.89 Patentblatt 89/52**

(84) Benannte Vertragsstaaten:
**AT BE CH DE ES FR GB GR IT LI LU NL SE**

(71) Anmelder: **WILO-Werk GmbH & Co. Pumpen-
und Apparatebau
Nortkirchenstrasse 100
D-4600 Dortmund 30(DE)**

(72) Erfinder: **Schmalfuss, Horst-Georg,Dr.-Ing.
Stengelweg 14
D-4600 Dortmund 30(DE)**

(74) Vertreter: **Patentanwaltsbüro Cohausz &
Florack
Schumannstrasse 97
D-4000 Düsseldorf 1(DE)**

(54) Spaltrohrpumpe.

(57) Die Erfindung betrifft eine Spaltrohrpumpe mit
einer Welle, auf der der Rotor des Elektromotors und
das Pumpenlaufrad fest ist, wobei zwischen Rotor
und Stator des Elektromotors das Spaltrohr koaxial
liegt und von der Förderflüssigkeit durchflossen ist,
wobei der Gesamtstrom der Förderflüssigkeit durch
das Innere des Spaltrohrs (6) verläuft.

Fig.1

EP 0 347 533 A2

## Spaltrohrpumpe

Die Erfindung betrifft eine Spaltrohrpumpe mit einer Welle, auf der der Rotor des Elektromotors und das Pumpenlaufrad fest ist, wobei zwischen Rotor und Stator des Elektromotors das Spaltrohr koaxial liegt und von der Förderflüssigkeit durchflossen ist.

Bei Brauchwasseranlagen geschieht es leicht, daß sie biologisch aus unterschiedlichen Gründen verkeimen. Insbesondere in Verbindung mit Enthärtungsanlagen und bei Temperaturen um 40 Grad Celsius kommt es zu erheblichem Wachstum von Mikroorganismen, so daß Trinkwasserqualität nicht gewährleistet ist.

Zum Fördern des Brauchwassers ist es bekannt, Spaltrohrpumpen unterschiedlichster Bauart einzusetzen, so sind auch Spaltrohrkreiselpumpen bekannt, deren Spaltrohrinneres von der Förderflüssigkeit zum Kühlen des Elektromotors durchflossen ist, DE-A 3608178. Um das Brauchwasser zu desinfizieren, ist zusätzlich zu der Pumpe eine Desinfektionsvorrichtung erforderlich.

Aufgabe der Erfindung ist es, eine Spaltrohrpumpe zu schaffen, die das gesamte geförderte Medium behandelt, insbesondere desinfiziert. Zusätzlich oder alternativ ist es Aufgabe der Erfindung, eine Spaltrohrpumpe zu schaffen, die eine kleine, einfache und störungsunanfällige Bauweise insbesondere bei optimaler Motorenkühlung besitzt.

Diese Aufgaben werden erfindungsgemäß dadurch gelöst, daß der Gesamtstrom der Förderflüssigkeit durch das Innere des Spaltrohrs verläuft. Eine solche Pumpe besitzt nicht nur eine einfache Konstruktion bei geringen Abmessungen und optimaler Kühlung des Elektromotors, sondern sie nutzt das Spaltrohr auch zur thermischen Desinfektion des Fördermediums, insbesondere des Brauchwassers. Das Wachstum von Mikroorganismen wird verhindert, ohne einen zusätzlichen Konstruktionsaufwand oder weitere Vorrichtungen zu benötigen.

Vorzugsweise wird vorgeschlagen, daß ein Ende des Spaltrohrs mit dem Pumpeneinlaß und das gegenüberliegende Ende mit dem Pumpenauslaß verbunden ist. Eine konstruktiv besonders einfache und strömungsgünstige Konstruktion mit kleinen Abmessungen wird dann erreicht, wenn die Saugöffnung des Pumpenlaufrades auf der dem Spaltrohr zugewandten Seite des Laufrades liegt. Hierbei kann zumindest der äußere Rand der Saugöffnung des Pumpenlaufrades in das Spaltrohr hineinreichen.

Eine besonders kleine Bauweise bei optimalen Einbaumöglichkeiten in eine Leitung wird dann erreicht, wenn das Spaltrohr, Pumpeneinlaß und/oder Pumpenauslaß koaxial sind. Dies führt auch zu besonders geringen Strömungswiderständen.

Ein Ausführungsbeispiel der Erfindung ist in der Zeichnung dargestellt und wird im folgenden näher beschrieben. Es zeigen:

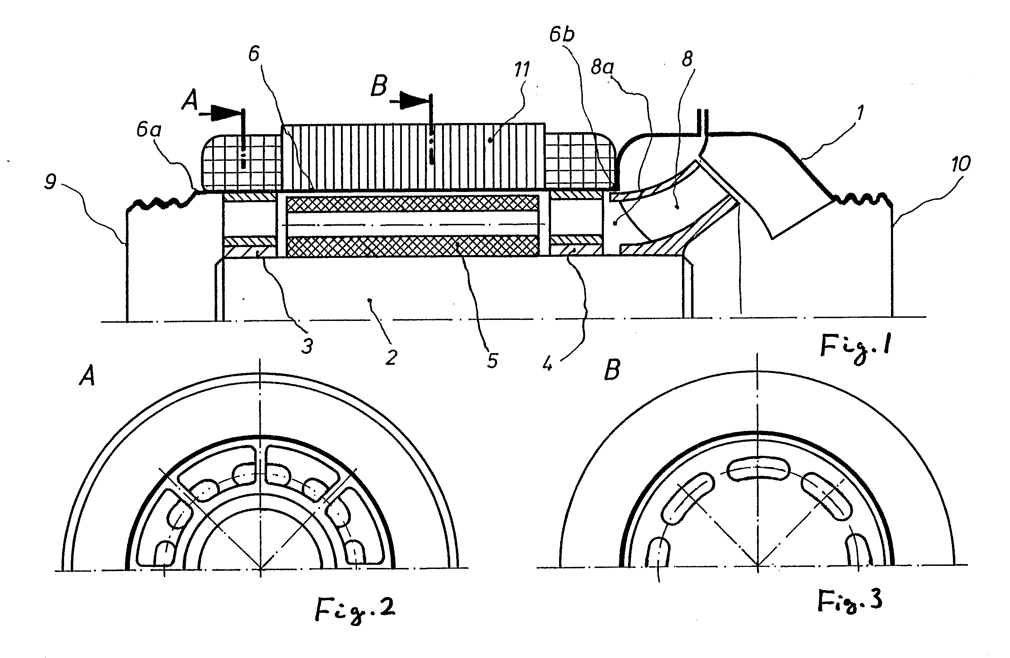

Fig. 1 einen axialen Schnitt durch die Pumpe;

Fig. 2 einen Schnitt nach A in Fig. 1;

Fig. 3 einen Schnitt nach B in Fig. 1.

Im Innern eines zylindrischen Pumpengehäuses 1 ist koaxial eine Welle 2 durch zwei Lager 3, 4 gelagert. Zwischen den beiden Lagern 3, 4 ist auf der Welle 2 der Rotor 5 des Elektromotors befestigt, der von einem Spaltrohr 6 koaxial umgeben ist. Um das Spaltrohr befindet sich der Stator 11 bzw. die Wicklungen des Elektromotors, die gegenüber dem Fördermedium, insbesondere Brauchwasser, abgekapselt sind. Hierzu ist das Spaltrohr 6 in Höhe seiner beiden offenen Stirnseiten 6a, 6b mit flanschartigen, ringförmigen Erweiterungen 7a, 7b versehen, insbesondere angeformt, die den Stator 11 zu beiden Seiten abdecken.

An einem Ende der Welle 2 ist koaxial ein Laufrad 8 einer Radialkreiselpumpe befestigt, dessen Einlaßöffnung 8a dem Spaltrohr 6 zugewandt ist, wobei vorzugsweise der äußere Rand der Einlaßöffnung 8a in das Spaltrohr 6 hineinreicht. Das Lager 4 befindet sich damit zwischen dem Rotor 5 und dem Laufrad 8, wobei sich beide Lager 3, 4 am Innern des Spaltrohrs 6 abstützen und eine solche Bauweise besitzen, daß sie einen erheblichen Flüssigkeitsstrom hindurchlassen.

Der insbesondere zum Spaltrohr 6 koaxiale Einlaß 9 liegt zu einem Ende des Spaltrohrs und der koaxiale Auslaß 10 zum anderen Ende des Spaltrohrs 6. Die Flüssigkeit strömt damit vom Einlaß 9 zur stirnseitigen ersten Eingangsöffnung 6a des Spaltrohrs, und von dort am Rotor 5 vorbei der stirnseitigen Auslaßöffnung 6b des Spaltrohres und über das Laufrad 8 zum Gehäuseauslaß 10.

In alternativen Ausführungsformen kann das Laufrad eine Axialströmung erzeugen, und ferner kann es auf der Einlaßseite auf der Welle 2 befestigt sein.

## Ansprüche

1. Spaltrohrpumpe mit einer Welle, auf der der Rotor des Elektromotors und das Pumpenlaufrad fest ist, wobei zwischen Rotor und Stator des Elektromotors das Spaltrohr koaxial liegt und von der Förderflüssigkeit durchflossen ist, **dadurch ge-**

kennzeichnet, daß der Gesamtstrom der Förderflüssigkeit durch das Innere des Spaltrohrs (6) verläuft.

2. Spaltrohrpumpe nach Anspruch 1, **dadurch gekennzeichnet,** daß ein Ende (6a) des Spaltrohrs (6) mit dem Pumpeneinlaß und das gegenüberliegende Ende (6b) mit dem Pumpenauslaß verbunden ist.

3. Spaltrohrpumpe nach einem der vorherigen Ansprüche, **dadurch gekennzeichnet,** daß die Saugöffnung (8a) des Pumpenlaufrades (8) auf der dem Spaltrohr (6) zugewandten Seite des Laufrades (8) liegt.

4. Spaltrohrpumpe nach Anspruch 3, **dadurch gekennzeichnet,** daß zumindest der äußere Rand der Saugöffnung (8a) des Pumpenlaufrades (8) in das Spaltrohr (6) hineinreicht.

5. Spaltrohrpumpe nach einem der vorherigen Ansprüche, **dadurch gekennzeichnet,** daß das Spaltrohr (6), Pumpeneinlaß (9) und/oder Pumpenauslaß (10) koaxial sind.

Fig.1

Fig.2

Fig.3